(19) Europäisches Patentamt
European Patent Office
Office européen des brevets

(11) **EP 4 494 849 A1**

(12) **EUROPEAN PATENT APPLICATION**

(43) Date of publication:
**22.01.2025 Bulletin 2025/04**

(21) Application number: **23218983.7**

(22) Date of filing: **21.12.2023**

(51) International Patent Classification (IPC):
**B29C 64/245** (2017.01)   **B22F 12/30** (2021.01)
**B33Y 30/00** (2015.01)   B29C 64/118 (2017.01)
B22F 10/22 (2021.01)   B33Y 10/00 (2015.01)

(52) Cooperative Patent Classification (CPC):
**B29C 64/245; B22F 10/25; B22F 12/226;
B22F 12/37; B23K 9/04; B23K 26/0823;
B23K 26/342; B23K 37/0443; B23K 37/0461;
B33Y 30/00;** B29C 64/118; B33Y 10/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.07.2023 IT 202300014919**

(71) Applicant: **Ge Avio S.r.l.
Rivalta di Torino (IT)**

(72) Inventors:
• **PERADOTTO, Edoardo Maria
10040 Rivalta di Torino (IT)**
• **DE GRASSI, Alessandro
10040 Rivalta di Torino (IT)**

(74) Representative: **Hafner & Kohl PartmbB
Schleiermacherstraße 25
90491 Nürnberg (DE)**

(54) **DIRECTED ENERGY DEPOSITION COMPLIANT FIXTURES AND BUILD TABLE ASSEMBLIES INCLUDING THE SAME**

(57)    A build table assembly (104) for supporting a component (102), the build table assembly (104) including a base (202) having an upper surface (302), a frame (110) extending from the upper surface (302) of the base (202), the frame (110) defining an upper wall (310); a rim (112) formed on the upper wall (310) of the frame (110), and a plurality of fixture segments (114) positioned on the rim (112) opposite the upper wall (310) of the frame (110), the plurality of fixture segments (114) defining an arcuate build surface (116) on which the component (102) is built, the plurality of fixture segments (114) spaced apart from one another.

FIG. 1

## Description

### TECHNICAL FIELD

The present disclosure generally relates to directed energy deposition ("DED") additive manufacturing systems and methods and, more particularly, to DED systems and methods for reducing stress on a part during material deposition.

### BACKGROUND

Additive manufacturing is a suite of emerging technologies that are used to fabricate three-dimensional objects directly from digital models through an additive process, typically by depositing material layer upon layer and joining successive layers in place. DED is a type of additive manufacturing process utilized to fabricate new components and/or to repair or add additional material to existing components. Using DED, components can be fabricated layer-by-layer using a directed flow of feedstock material from a deposition nozzle. DED apparatuses use a focused energy source, such as a laser or electron beam, to melt the feedstock material and simultaneously deposit the melted material on a specified surface, where such melted material solidifies and fuses with other deposited materials, forming the component layer-by-layer.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:

FIG. 1 schematically depicts a perspective view of an additive manufacturing system, according to one or more embodiments shown and described herein;

FIG. 2 schematically depicts a perspective view of a build table assembly of the additive manufacturing system of FIG. 1, according to one or more embodiments shown and described herein;

FIG. 3 schematically depicts a perspective view of a fixture segment of the build table assembly of FIG. 2, according to one or more embodiments shown and described herein; and

FIG. 4 schematically depicts a partial cross-section view of the build table assembly of FIG. 2, according to one or more embodiments shown and described herein.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The terms "coupled," "fixed," "attached to," and the like refer to both direct coupling, fixing, or attaching, as well as indirect coupling, fixing, or attaching through one or more intermediate components or features, unless otherwise specified herein.

As used herein, the term "residual stress" refers to the amount and direction of stress remaining in the component after the additive manufacturing process, such as the combination of thermal stress resulting from cooling after deposition and the mechanical stress resulting from the application of compression forces.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

As used in this application, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily imply that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a ten percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Conventional additive manufacturing processes, such as DED systems, use solid platforms, plates, or fixtures, attached to a machine by a bolted joint or another suitable manner, on which a part is built. In manufacturing large parts, e.g., larger than 0.5 meters in diameter, an isostatic fixture movable in at least one axis is employed to reduce residual stress on the fixture and the part during fabrication. These fixtures may include a plate having one or more, in some instances three, slots through which a bolt extends and fixes the fixture to the machine. The slots permit the bolts to move within the slots to allow for expansion and shrinkage of the fixture in at least one axis during the manufacturing process as the fixture, as well as the part, is heated and subsequently cooled.

However, the cost of these plates for a large part can be high relative to the total cost of producing the part, even considering that the fixture may be reused for additional parts. Additionally, part unloading operations in which the part is removed from the fixture, such as removal of the bolts, might induce a sudden release of residual stress resulting in part crack or failure.

As such, it is desirable to provide a compliant fixture including a plurality of sectors placed together to form the basis on which the first layer of the part being formed will be deposited. In embodiments described herein, the plurality of sectors forms a ring on which a cylindrical part is built. As described in detail herein, the sectors are not physically connected to each other, thus allowing the layers of the part to expand and shrink direction during the manufacturing process. This movement allows reduced excessive residual stress formation within the fixture and the part to comply with the thermal cycles during the manufacturing process.

The inventors of the present disclosure developed architectures for fixtures for parts, such as cylindrical parts. Particularly, the inventors proceeded in the manner of designing fixtures with given dimensional and material characteristics based on the dimensions and material characteristics of the part to be manufactured. During the course of this practice of studying/evaluating various fixture characteristics considered feasible for optimally reducing residual stress formation in the part, the inventors unexpectedly discovered that a certain relationship exists between the tendency of a part to fail and a ratio of stresses between the part and the fixture. Particularly, the inventors identified that when a ratio of stresses between the part and the fixture is less than 1.0, part failure, such as for example deformation and cracking, is unlikely to occur. By performing the calculations described in the below expressions, it is possible to eliminate infeasible designs and utilize appropriate materials for the fixture segments 114 based on a particular component 102 to be built that would previously be unknown without the below expressions. Such non-feasible designs for fixture segments 114 would result in excessive stress accumulation in the component 102 and/or component failure during the manufacturing process. Additionally, the inventors identified that the particular ratio indicates to what extent the fixture is being utilized. For example, a smaller ratio indicates that the quality of the material forming the fixture is likely excessive and lesser quality, e.g., weaker material, is used while still avoiding part failure. On the other hand, a larger ratio indicates that the part is closer to failure and a stronger material forming the fixture should be used. Accordingly, the ratio identifies an optimal design for the fixture segments 114 given an accumulated stress level in the component 102.

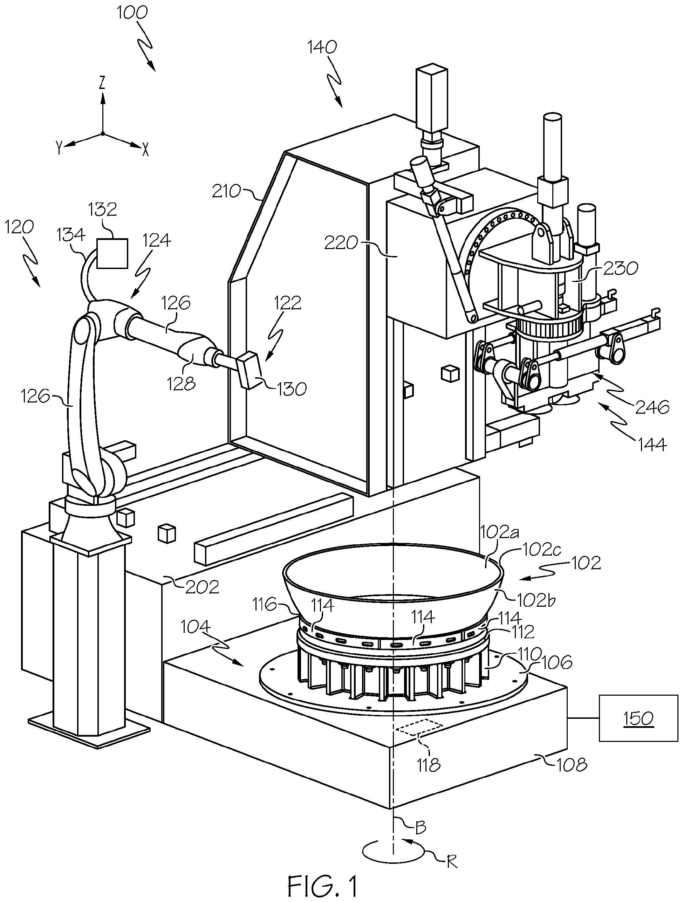

Referring now to FIG. 1, a DED additive manufacturing system 100 (hereinafter, the system 100) according to one or more embodiments of the present disclosure is illustrated. The system 100 is configured to construct or build a component 102 from a feedstock material. The component 102 has an interior side surface 102a, an opposite exterior side surface 102b, and a layer or surface 102c being built. In the illustrated example, the component 102 is a cylindrically shaped component, but in other examples, the component 102 may have a different geometry.

As illustrated, the system 100 includes a build table assembly 104. In embodiments, at least a portion of the build table assembly 104 is configured to rotate about a build table axis B of the build table assembly 104 extending parallel to the Z-axis of the coordinate axes, rotating the component 102 supported on the build table assembly 104. Thus, the build table assembly 104 is a rotary build table assembly 104. However, it should be appreciated that in other embodiments, the build table assembly 104 is fixed such that the build table assembly 104 does not rotate as the component 102 is being built.

In particular, and as described in more detail herein, the build table assembly 104 includes a base 106 supported on a platform 108, a frame 110 extending from the base 106 in a direction opposite the platform 108, and a rim 112 provided on the frame 110 opposite the base 106. The build table assembly 104 further includes a plurality of fixture segments 114 provided on the rim 112 of the frame 110 that encircle the rim 112. The fixture segments 114 each define an arcuate build surface 116 on which the component 102 is built and supported.

As described herein, any number of fixture segments 114 may be utilized and the total number of fixture segments 114 is dependent on the length of each fixture segment 114 relative to a given length of build surface 116. For example, a greater number of fixture segments 114 is utilized in embodiments in which each fixture segment 114 has a reduced length. Alternatively, a lesser number of fixture segments 114 is utilized in embodiments in which each fixture segment 114 has an increased length. Each fixture segment 114 is fixed to the rim 112 of the build table assembly 104, as described in more detail herein. However, the fixture segments 114 are not fixed to one another. As such, the fixture segments 114 are permitted to move radially during the manufacturing process to permit expansion and shrinkage of the component 102. However, it should be appreciated that the fixture segments 114 may also, or alternatively, move during expansion and contraction in any direction. As shown, the frame 110 and thus the rim 112 have a cylindrical geometry on which the component 102 is built. Accordingly, the component 102 similarly has a cylindrical cross-section. The manner in which the fixture segments 114 are fixed to the rim 112 of the build table assembly 104 is described in more detail herein.

In the illustrated embodiment, the base 106 of the build table assembly 104 rotates relative to the platform 108. Accordingly, an actuator 118 may be provided in either the platform 108 or the base 106 for rotating the build table assembly 104 about the build table axis B in a clockwise or counterclockwise rotation direction. In the illustrated embodiment, the actuator 118 rotates the build table assembly 104 in a counterclockwise direction R about the build table axis B. Also, as hereinafter described, the actuator 118 rotates the build table assembly 104 at a variable rotation speed. In some examples, the base 106 is further configured to translate the build table assembly 104 vertically along the build table axis B.

The system 100 also includes a deposition assembly 120. The deposition assembly 120 has a deposition head 122 through which a stream of melted feedstock material may be deposited to fabricate the component 102. As described herein, the melted feedstock material is deposited or output from the deposition head 122 at a deposition rate. The deposition assembly 120 includes a structure that adjustably and movably supports the deposition head 122. In the illustrated example, the deposition assembly 120 includes a robotic arm 124 including a plurality of links 126 that may articulate relative to each other so as to adjust the position of the deposition head 122 which, in the illustrated embodiment, is supported on a distal-most link 128 of the plurality of links 126. Accordingly, it should be understood that the deposition head 122 and the build table assembly 104 are movable relative to each other. For example, the robotic arm 124 may include one or more actuators that rotate the links 126, 128 of the robotic arm 124 relative to one another so as to move the robotic arm 124 and the deposition head 122 supported thereon relative to the build table assembly 104. It will be appreciated that the robotic arm 124 may have various other configurations for moving and adjusting a position of the deposition head 122 in multiple degrees of freedom without departing from the present disclosure.

The deposition assembly 120 includes an energy source 130 and a material source 132. The material source 132 is configured to convey feedstock material (e.g., metal or polymer-based wires) to the deposition head 122 where it is deposited on the build table assembly 104. In the illustrated embodiment, the material source 132 is a material spool and feeder system configured to convey a wire 134 to the deposition head 122. Thus, the material source 132 may house the wire 134 that is fed to the deposition head 122. For example, the wire 134 may be routed externally of the robotic arm 124 to the deposition head 122 or through an internal cavity of the robotic arm 124 that connects to the deposition head 122. In embodiments, the wire 134 may be a metal or polymer-based wire. In other embodiments, rather than being a material spool and feeder system configured to convey the wire 134, the material source 132 may include a pressurized powder source that conveys a pressurized stream of powder feedstock material to one or more material delivery devices (e.g., nozzles, valves, or the like) of the deposition head 122. Any suitable feedstock material capable of being used in DED processes may be used consistent with the present disclosure.

The energy source 130 may take various forms depending on the implementation. In the illustrated example, the energy source 130 is a plasma transferred arc heat source. In other examples, the energy source 130 may include a laser source and optics configured to direct a laser beam having a desired energy density to the build surface 116 of the fixture segments 114. In some examples, the energy source 130 may include an electron emitter connected to a power supply and at least one focusing coil configured to direct an electron beam to the component 102 being constructed on the build surface 116 of the fixture segments 114. In such embodiments, the build table assembly 104 may be placed in a build chamber (not depicted) under a vacuum or having an oxygen-reduced environment. However, the energy source 130 may take various other forms, such as a plasma source, an electron beam source, a resistance heater, etc.

The system 100 may include any number of energy sources and material sources in accordance with the present disclosure. Additionally, feedstock material from the material source 132 may be routed to the deposition head 122 in various ways for emission onto the build table assembly 104. For example, in embodiments, the wire 134 from the material source 132 may be divided into two or more material feeds that are routed through the robotic arm 124 into the deposition head 122. Each material feed may exit the deposition head 122 at a separate delivery nozzle. In addition, multiple energy sources may be utilized to forming the same melt pool such as, for example, an electric arc heat source and a laser.

In operation, one or more streams of feedstock material are fed into a path of an energy beam from the energy source 130 and emitted by the deposition head 122 as a stream of melted feedstock. In particular, at points of overlap between the energy beam and the streams of feedstock material where the energy beam possesses the requisite energy density, the energy may heat the feedstock material to a sufficient extent to form a melt pool on the build surface 116. Melted feedstock material may continuously be fed through and deposited from the deposition head 122 such that the melt pool forms a pattern corresponding to the movement pattern of the deposition head 122 and the build table assembly 104. Movements of the deposition head 122 and the build table assembly 104 may be determined based on a desired shape of the component 102 being built such that, as the melt pool cools, the feedstock material solidifies to form a portion of the component 102. For example, rotation of the build table assembly 104 about the build table axis B as the deposition head 122 deposits the melt pool results in a circular shaped stream of melted feedstock material that, as the build table assembly 104 continuously rotates over time, will layer upon itself and build a cylindrical shaped component, such as the component 102. Also, the robotic arm 124 may position the deposition head 122 radially towards or away from the build table axis B to create a non-circular shaped component with a varying size and diameter as illustrated.

The system 100 further includes a compression rig 140. The compression rig 140 is positioned proximate the deposition assembly 120 and is operable to continuously apply a compressive load to the deposited feedstock material which forms the component 102. As described herein, the compression rig 140 is configured to apply a compressive load to the component 102 (e.g., a compression phase) during or simultaneous with a deposition phase where the deposition assembly 120 is depositing the stream of melted feedstock material to build the component 102. In the illustrated embodiment, the compression rig 140 includes at least one actuator and a load source 144, as further described below.

Generally, the at least one actuator is configured to move and manipulate the orientation of the load source 144 relative to the portion of the component 102 to which a compressive load is to be applied. The load source 144 applies a force to the deposited material to introduce the required strain level in the deposited layer and/or improve mechanical properties of the component 102.

As described herein, in embodiments, the robotic arm 124 is operable to position the deposition head 122 in close proximity of the load source 144 and/or the compression rig 140 is operable to position the load source 144 in close proximity of the deposition head 122. The distance between the load source 144 and the deposition head 122 may be increased if cold rolling is intended, for example, by rotating the build table assembly 104 in an opposite clockwise direction. In this manner, it is possible to operate the deposition head 122 to deposit melted feedstock material in the melt pool while the load source 144 applies the compressive load to the component 102, with the load source 144 trailing the deposition head 122 such that the load source 144 applies load to previously deposited material a short time thereafter depending on the rotation speed of the build table assembly 104. Thus, the compression rig 140 may apply the compressive load to the component 102 at the same time as the deposition head 122 is creating the melt pool, at least in close proximity to the melt pool of the component 102. Not only does this decrease machine cycle time, but also allows the compressive load to be applied to the component 102 at a constant temperature and at a temperature suitable to provide the component 102 with forged-like qualities. However, as discussed herein, the build table assembly 104 may be used separate and independent of the robot arm 124 and compression rig 140.

In embodiments, the system 100 may further include a controller 150. The controller 150 may be communicatively coupled to the build table assembly 104, the deposition assembly 120, and/or the compression rig 140. Thus, the controller 150 may be in communication with the base 106, the robotic arm 124, and/or the compression rig 140 so as to control operation of the same. For example, the controller 150 may include a processor and memory storing computer readable instructions which, when executed by the processor, dynamically controls a rotation direction and/or a rotation speed of the build table assembly 104 about the build table axis B, a vertical translation of the build table assembly 104 along the build table axis B, a position and orientation of the deposition head 122 in space via the robotic arm 124, a position and orientation of the load source 144 in space, and/or a magnitude of compressive load applied by the load source 144. The controller 150 may also be configured to control a feed rate of the feedstock material being fed to the deposition head 122 and/or a deposition rate at which the stream of melted feedstock material is output from the deposition head 122.

In embodiments, the system 100 may have various sensors configured to communicate with the controller 150, and the controller 150 may utilize data from the various sensors to control operation of the build table assembly 104, the deposition assembly 120, and/or the compression rig 140 as may be desired for fabricating a particular component 102.

In the illustrated example, the deposition head 122 deposits feedstock material to fabricate the component 102 on the build table assembly 104 while the build table assembly 104 rotates in the counterclockwise direction R about the build table axis B. As the build table assembly 104 continues to rotate the component 102 in the counterclockwise direction R, the feedstock material previously deposited by the deposition head 122 will encounter the load source 144 after being deposited from the deposition head 122. Thus, in the illustrated embodiment, the deposition head 122 acts on a particular portion of the component 102 before the load source 144 acts on that particular portion of the component 102 and, similarly, the load source 144 acts on a particular portion of the component 102 after the deposition head 122 has acted on that particular portion of the component 102. Stated differently, because the build table assembly 104 rotates in the counterclockwise direction R in the illustrated embodiment, the deposition head 122 is positioned before the load source 144 and the load source 144 is positioned after the deposition head 122.

In embodiments, the compression rig 140 may include a slidable support structure 210 that is configured to slide relative to the base 202 laterally in the Y-axis direction. In embodiments, the compression rig 140 may include a slidable positioning structure 220 that is configured to slide relative to the slidable support structure 210 vertically in the Z-axis direction. In embodiments, the compression rig 140 includes an adjustable support member 230 that supports a compression head 246, which includes the load source 144. The adjustable support member 230 is coupled to the slidable positioning structure 220 and configured to permit relative rotation of the compression head 246.

In embodiments, the load source 144 is provided with a plurality of rollers arranged to apply compressive load to the component 102 at various portions of the component 102. The compression head 246 is configured to rotatably retain a plurality of rollers at various orientations so as to roll upon certain portions of the component 102.

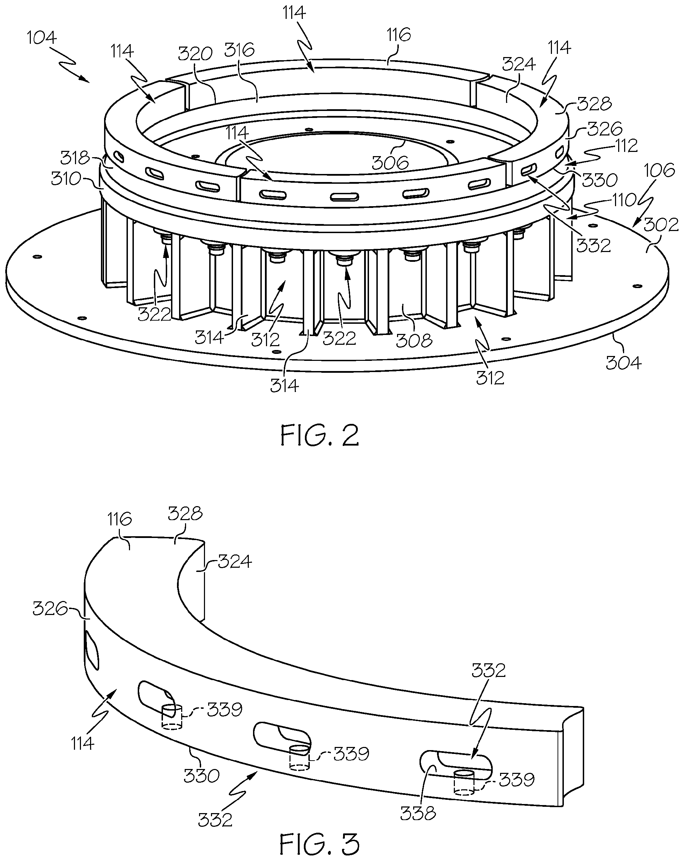

Referring now to FIG. 2, the build table assembly 104 is shown in more detail separate from the platform 108 and the component 102 depicted in FIG. 1. As described herein and with more particularity, the build table assembly 104 includes the base 106, which has an upper surface 302 and an opposite lower surface 304. It should be appreciated that the lower surface 304 of the base 106 may be provided on the platform 108 (FIG. 1) and, in embodiments, rotatably and translatably fixed thereto via the actuator 118 such that the base 106, and thus the other components of the build table assembly 104 coupled to the base 106, may rotate and translate vertically relative to the platform 108. As shown in FIG. 2, the base 106 has a circular geometry. However, it should be appreciated that the base 106 may have any suitable geometry other than that depicted herein.

The build table assembly 104 further includes the frame 110 extending from the upper surface 302 of the base 106 in a direction opposite the platform 108 (FIG. 1). The frame 110 includes an inner surface 306 and an outer surface 308 opposite the inner surface 306. The frame 110 further includes an upper wall 310 provided opposite the upper surface 302 of the base 106. A distance between the inner surface 306 and the outer surface 308 of the frame 110 defines a frame thickness. A plurality of recesses 312 are formed in the outer surface 308 of the frame 110 and extend radially toward the inner surface 306 of the frame 110. The recesses 312 define fins 314 extending between the upper wall 310 of the frame 110 and the base 106. In embodiments, the recesses 312 each have the same width such that the fins 314 are equidistantly spaced apart from one another along an entire circumference of the outer surface 308 of the frame 110. As shown in FIG. 2, the frame 110 has a generally circular geometry despite the recesses 312 being formed in the outer surface 308 of the frame 110. However, it should be appreciated that the frame 110 may have any suitable geometry other than that depicted herein.

The build table assembly 104 further includes the rim 112 provided on the upper wall 310 of the frame 110 and completely encircles the upper wall 310 of the frame 110. The rim 112 includes an inner surface 316 and an outer surface 318 opposite the inner surface 316. The rim 112 further includes an upper surface 320 opposite the upper wall 310 of the frame 110 that extends between the outer surface 318 and the inner surface 316 of the rim 112. A distance between the inner surface 316 and the outer surface 318 of the rim 112 defines a rim thickness. As shown in FIG. 2, the rim thickness is less than the frame thickness. In embodiments, the rim 112 and the upper wall 310 of the frame 110 are formed as a one-piece, monolithic structure. In other embodiments, the rim 112 is removably fixed to the upper wall 310 of the frame 110. As shown in FIG. 2, the rim 112 has a circular geometry. However, it should be appreciated that the rim 112 may have any suitable geometry other than that depicted herein.

The build table assembly 104 further includes the plurality of fixture segments 114 provided on the rim 112. As shown in FIG. 2, the build table assembly 104 includes four fixture segments 114 formed to encircle the rim 112. However, it should be appreciated that the build table assembly 104 may include any suitable number of fixture segments 114 based on a circumference of the rim 112. In addition, as shown in FIG. 2, and discussed in more detail herein, each fixture segment 114 is fixed to the rim 112 by a plurality of fasteners 322. Specifically, each fixture segment 114 includes more than two fasteners 322 such as, for example four fasteners 322 received within a corresponding fixture segment 114, as shown in FIG. 2. However, it should be appreciated that any suitable number of fasteners 322 is utilized to secure each fixture segment 114 to the rim 112 and the frame 110 such as, for example, three fasteners 322, five fasteners 322, and more than five fasteners 322.

As shown in FIG. 3, an individual fixture segment 114 is depicted. It should be appreciated that each fixture segment 114 may include identical structure. Thus, like parts for each fixture segment 114 will be denoted with like reference numbers. Each fixture segment 114 has an arcuate shape and includes an inner surface 324 and an outer surface 326 opposite the inner surface 324 defining a fixture thickness. The fixture thickness of each fixture segment 114 may also be defined by a difference between an inner radius of the fixture segment 114 measured between the build table axis B (FIG. 2) and the inner surface 324 of the fixture segment 114, and an outer radius of the fixture segment 114 measured between the build table axis B (FIG. 2) and the outer surface 326 of the fixture segment 114. The fixture segment 114 further includes an upper surface 328 and a lower surface 330 opposite the upper surface 328. The upper surface 328 and the lower surface 330 extend between the inner surface 324 and the outer surface 326.

The fixture segment 114 includes a plurality of cavities 332 formed therein. As shown, the fixture segment 114 has four cavities 332 formed therein. However, it should be appreciated that the any suitable number of cavities 332 is formed in the fixture segment 114 such as, for example, three cavities 332, five cavities 332, and more than five cavities 332. Specifically, the number of cavities 332 formed in the fixture segment 114 corresponds to the number of fasteners 322 (FIG. 2) utilized for fixing the fixture segment 114 to the rim 112 and frame 110. In embodiments, each cavity 332 has an obround shape and defines a ledge 338. As shown, a bore 339 is formed in each cavity 332 of the fixture segment 114 extending from the ledge 338 through the lower surface 330 of the fixture segment 114 to permit a respective fastener 322 to extend therethrough.

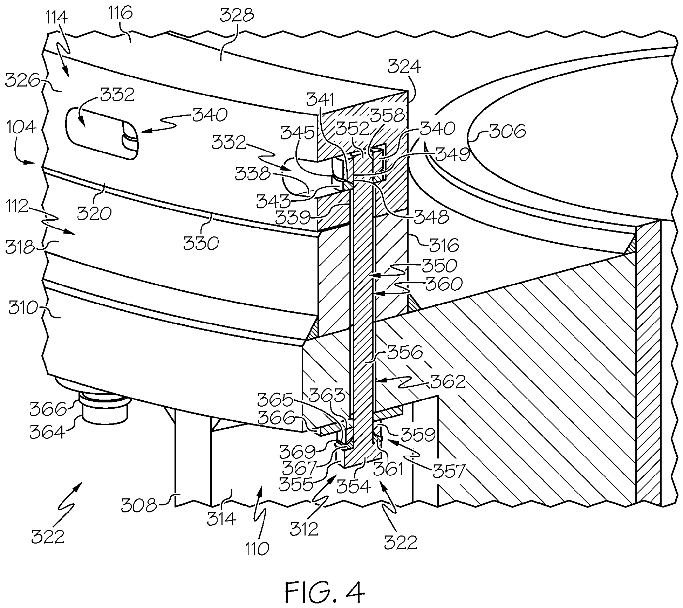

Referring now to FIG. 4, a cross-sectional view of a fixture segment 114 provided on the rim 112 is depicted. As shown, the fixture segment 114 has a fixture thickness substantially equal to the rim thickness. As shown in FIG. 4, an upper nut 340 is provided within each cavity 332 formed in the fixture segment 114. The upper nut 340 is positionable within the cavity 332 through the outer surface 326 of the fixture segment 114. A bore 348 is formed in the upper nut 340 to permit the fastener 322 to extend therethrough. Internal threads 349 are formed within the bore 348 of the upper nut 340. In embodiments, the upper nut 340 has a spherical lower surface 341 providing an increased thickness at a center of the upper nut 340. In such embodiments, an upper washer 343 is provided between the upper nut 340 and the ledge 338 of the cavity 332. The upper washer 343 has a spherical upper surface 345 providing a decreased thickness at a center of the upper washer 343 corresponding to a taper of the spherical lower surface 341 of the upper nut 340. Accordingly, the spherical upper surface 345 of the upper washer 343 mates with the spherical lower surface 341 of the upper nut 340. The presence of the upper washer 343 having the spherical upper surface 345 that mates with the spherical lower surface 341 of the upper nut 340 reduces shear loads on the fastener 322 itself during tension and/or compression. However, in embodiments, it should be appreciated that either one or both of the lower surface 341 of the upper nut 340 and the upper surface 345 of the upper washer 343 may have any suitable geometry such as, for example, conical or frustoconical as opposed to spherical.

Referring still to FIG. 4, the fastener 322 includes a shaft 350 having a first end portion 352, a second end portion 354 opposite the first end portion 352, and a body 356 extending between the first end portion 352 and the second end portion 354. The body 356 of the shaft 350 has a shaft diameter. The shaft 350 has external threads 358 provided at the first end portion 352 for engaging the internal threads 349 of the upper nut 340. Thus, the first end portion 352 of the shaft 350 is received within and engages the internal threads 349 of the upper nut 340 to secure the first end portion 352 of the shaft 350 to the fixture segment 114. The shaft 350 of the fastener 322 extends through a channel 360 formed within the rim 112 and a channel 362 formed within the upper wall 310 of the frame 110. Thus, the channel 360 formed within the rim 112 is coaxial with the channel 362 formed within the upper wall 310 of the frame 110. The channel 360 formed in the rim 112 and the channel 362 formed in the upper wall 310 of the frame 110 have a channel diameter greater than the shaft diameter.

The second end portion 354 of the fastener 322 defines a head 355 having a diameter greater than the shaft diameter. The second end portion 354 terminates within a corresponding recess 312 formed in the outer surface 308 of the frame 110. In embodiments, a lower planar washer 366 is provided between the head 355 of the fastener 322 and the upper wall 310 of the frame 110. Additionally, in embodiments, a lower washer 357 is provided between the head 355 of the fastener 322 and the lower planar washer 366. The lower washer 357 may include a first lower washer portion 359 and a second lower washer portion 361. The first lower washer portion 359 includes a planar upper surface 363 and a spherical lower surface 365 opposite the planar upper surface 363. The spherical lower surface 365 of the first lower washer portion 359 provides a decreased thickness at a center of the first lower washer portion 359. The second lower washer portion 361 includes a planar lower surface 367 and a spherical upper surface 369 opposite the planar lower surface 367. The spherical upper surface 369 of the second lower washer portion 361 provides an increased thickness at a center of the second lower washer portion 361. Accordingly, the spherical lower surface 365 of the first lower washer portion 359 mates with the spherical upper surface 369 of the second lower washer portion 363 The presence of the first lower washer portion 361 having the spherical lower surface 365 that mates with the spherical upper surface 369 of the second lower washer portion 363 reduces shear loads on the fastener 322 itself during tension and/or compression. However, in embodiments, it should be appreciated that either one or both of the lower surface 365 of the first lower washer portion 358 and the upper surface 369 of the second lower washer portion 361 may have any suitable geometry such as, for example, conical or frustoconical as opposed to spherical.

As shown in FIG. 4 and discussed herein, the shaft diameter is less than the channel diameter. Thus, as the fastener 322 remains fixed to the fixture segment 114 at the first end portion 352 of the shaft 350 received within the upper nut 340, the fastener 322 is permitted to move radially relative to the rim 112 and the frame 110 throughout the manufacturing process of the component 102. As described herein, during the manufacturing process, the component 102 will expand radially. Thus, the fixture segments 114 are configured to shift radially relative the rim 112 to accommodate the expansion of the component 102. To ensure that the fixture segments 114 remain secured to the rim 112 and the frame 110, the first end portion 352 of the shaft 350 is retained within the cavity 332 formed in the corresponding fixture segment 114 while the shaft 350 remains movable in a radial direction within the channel 360 of the rim 112 and the channel 362 of the frame 110. The amount of radial movement permitted by the fixture segment 114 relative to the rim 112 is defined by a difference between the shaft diameter and the channel diameter, as well as a friction force between components, resulting from a locking force and the friction coefficient. Stated another way, the greater the difference between the channel diameter and the shaft diameter, the greater the amount of radial movement of the fixture segment 114 relative to the rim 112.

As alluded to earlier, the inventors discovered, unexpectedly, that a relationship exists between the relative ratio of stresses between the component 102 and the fixture segments 114. Specifically, the inventors discovered that the ratio of stresses between the component 102 and the fixture segments 114 indicated whether part failure is likely to occur. Particularly, the inventors identified that part failure is unlikely to occur when the ratio is less than 1.0. Additionally, the inventors discovered that the ratio of stresses between the component 102 and the fixture segments 114 indicated whether the material forming the fixture segments 114 was being underutilized such that it would be beneficial from a cost perspective to use a lesser quality material for purposes of forming the particular component 102. As a result, improvements in component quality and material efficiency was realized.

More specifically, the particular ratio between the component 102 stresses and the fixture segments 114 stresses is determined according to expression (1):

$$R_s = \oint_F S\_p \left/ \left( \oint_F \min(YS_{fixture}) + \sum_N (YS_{fastener} + YS_{upper\_nut}) \right) \right.$$

(1)

In the above expression (1) in which $R_s$ represents the ratio of stresses between the component 102 and the fixture segments 114, $S\_p$ represents the stress accumulated in a tangential portion of the component 102, $YS_{fixture}$ represents a yield stress of the fixture segments 114, $YS_{fastener}$ represents the yield stress of the fastener 322, and $YS_{upper\_nut}$ represents the yield stress of the upper nut 340. In the above expression (1), $\oint_F$ represents an integral force (F) and N represents the number of fasteners 322 and upper nuts 340.

Initially, a component sector area ($A_{component\_sector}$) is determined according to the expression (2):

$$A_{component\_sector} = 2\pi \times \frac{R_{out} + R_{in}}{2} \times \frac{R_{out} - R_{in}}{N_{fixtures}}$$

(2)

In the above expression (2), $R_{out}$ represents an outer radius of the fixture segments 114, $R_{in}$ represents an inner radius of the fixture segments 114, and $N_{fixtures}$ represents the total number of fixture segments 114. As described herein, the outer radius and the inner radius of the fixture segments 114 are measured from the build table axis B of the build table assembly 104.

Component stress $S\_p$ is determined by finite element method (FEM) analysis. An integral force in kilonewtons (kN) ($\oint_F S\_p$) is determined according to expression (3):

$$\oint_F S\_p = \frac{S\_p \times A_{component\_sector}}{1000}$$

(3)

It should be appreciated that dividing by "1000" in the above and below expressions was merely to maintain consistent units.

Fixture yield stress $YS_{fixture}$ represents a known value based on the property of the material forming the fixture segments 114. Additionally, min (YS$_{fixture}$) represents a minimum fixture yield stress and, particularly, a minimum yield stress of any portion of the fixture segments 114. $\oint_F$ min (YS$_{fixture}$), which represents the integral of the minimum yield stress of any portion of the fixture segments 114 (min (YS$_{fixture}$)) is determined according to expression (3):

$$\oint_F \min (\text{YS}_{fixture}) = \frac{\left(\frac{\text{YS}_{fixture}}{10} \times A_{component\_sector}\right)}{1000} \qquad (4)$$

The sum of fastener yield stress $\Sigma_N$(YS$_{fastener}$) is determined according to expression (5):

$$\sum_N (\text{YS}_{fastener}) = \frac{\left(YS_{fastener} \times \pi \times Radius_{fastener}^2\right)}{1000} \times N_{fasteners}$$

$$(5)$$

The fastener yield stress ($YS_{fastener}$) represents a known value based on the property of the material forming the fastener. Additionally, the radius of the fastener 322 ($Radius_{fastener}$) is equal to one-half the diameter of the shaft 350 of the fastener 322. $N_{fasteners}$ represents the total number of fasteners 322 associated with each fixture segment 114.
Additionally, the sum of upper nut yield stress $\Sigma_N$(YS$_{upper\_nut}$) is determined according to expression (6):

$$\sum_N (\text{YS}_{upper\_nut}) = \frac{\left(YS_{upper\_nut} \times \pi \times Radius_{fastener}^2\right)}{1000} \times N_{fasteners}$$

$$(6)$$

In embodiments, the upper nut 340 and the fastener 322 may be formed from the same material. In this embodiment, the fastener yield stress ($YS_{upper\_nut}$) is equal to the upper nut yield stress.
Accordingly, the solution of expression (1) is equal to the solution of expression (4) divided by the sum of the solutions of expression (4), expression (5), and expression (6). In other words, the ratio of stresses between the component 102 and the fixture segments 114 (R$_s$) is determined by the integral of component stress ($\oint_F$ S_p) divided by the sum of the minimum fixture segment yield stress ($\oint_F$ min (YS$_{fixture}$)), the sum of fastener yield stress $\Sigma_N$(YS$_{fastener}$), and the sum of upper nut yield stress $\Sigma_N$(YS$_{upper\_nut}$), wherein each of the results are in kN.
As described herein, the inventors discovered that the solution of expression (1), e.g., the ratio of stresses (R$_s$), being less than 1.0 ensures that component failure is unlikely to occur. This is determined based on a number of tests with varying parameters in which part failure (e.g., part cracking) occurred when the above expressions were not satisfied and part failure did not occur when the above expressions were satisfied. More particularly, the inventors discovered particular ranges for the ratio of stresses (R$_s$) to ensure that the material forming the fixture segments 114 is sufficiently utilized. Specifically, the inventors discovered that a ratio (R$_s$) equal to or greater than 0.2 and equal to or less than 0.8 is sufficient to cover all feasible designs of the component 102. More specifically, the inventors discovered that applying a ratio (R$_s$) equal to or greater than 0.3 and equal to or less than 0.5 ensures that the material forming the fixture segments 114 are not overutilized or underutilized given the parameters of the component 102.
Although specific features of various embodiments may be shown in some drawings and not in others, this is for convenience only. In accordance with the principles of the present disclosure, any feature of a drawing may be referenced and/or claimed in combination with any feature of any other drawing.
This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.
Further aspects are provided by the subject matter of the following clauses:
A build table assembly for supporting a component, the build table assembly comprising: a base having an upper surface; a frame extending from the upper surface of the base, the frame defining an upper wall; a rim formed on the upper wall of the frame; and a plurality of fixture segments positioned on the rim opposite the upper wall of the frame, the plurality of fixture segments defining an arcuate build surface on which the component is built, the plurality of fixture segments spaced apart from one another.

The build table assembly according to the previous clause, wherein each fixture segment of the plurality of fixture segments comprises: an inner surface; an outer surface opposite the inner surface; an upper surface; a lower surface opposite the upper surface; and a plurality of cavities spaced apart from one another extending through the outer surface and the lower surface.

The build table assembly according to any one of the previous clauses, wherein the plurality of fixture segments comprises four fixture segments.

The build table assembly according to any one of the previous clauses, further comprising: a plurality of upper nuts, each upper nut of the plurality of upper nuts received within a corresponding cavity of the plurality of cavities; and a plurality of fasteners fixing each fixture segment of the plurality of fixture segments to the rim, each fastener of the plurality of fasteners threadedly engaging a corresponding upper nut to retain the plurality of fasteners within a corresponding cavity.

The build table assembly according to any one of the previous clauses, wherein each cavity has an obround shape.

The build table assembly according to any one of the previous clauses, wherein each fastener of the plurality of fasteners extends through a corresponding channel formed in the frame, a diameter of the channel being greater than a diameter of the fastener to permit outward radial movement of the plurality of fixture segments relative to the frame.

The build table assembly according to any one of the previous clauses, wherein a plurality of recesses are formed in an outer surface of the frame and defines a plurality of fins, each fastener of the plurality of fasteners terminating within a corresponding recess of the plurality of recesses.

The build table assembly of claim 1, wherein a ratio of stresses between the component and the plurality of fixture segments is less than 1.0 and defined by:

$$R_s = \oint_F S\_p \left/ \left( \oint_F \min(YS_{fixture}) + \sum_N (YS_{fastener} + YS_{upper\_nut}) \right) \right.$$

where S_p represents the stress accumulated in a tangential portion of the component, $YS_{fixture}$ represents a yield stress of the fixture segments, $YS_{fastener}$ represents a yield stress of the plurality of fasteners, and $YS_{upper\_nut}$ represents a yield stress of the upper nut.

The build table assembly according to any one of the previous clauses, wherein the ratio of stresses between the component and the plurality of fixture segments is equal to or greater than 0.2 and equal to or less than 0.8.

The build table assembly according to any one of the previous clauses, wherein the ratio of stresses between the component and the plurality of fixture segments is equal to or greater than 0.3 and equal to or less than 0.5.

An additive manufacturing system for producing a component, the additive manufacturing system comprising: a platform; a build table assembly provided on the platform and rotatable relative to the platform about a vertical axis of the build table assembly, the build table assembly comprising: a base having an upper surface; a frame extending from the upper surface of the base, the frame defining an upper wall; a rim formed on the upper wall of the frame; and a plurality of fixture segments positioned on the rim opposite the upper wall of the frame, the plurality of fixture segments defining an arcuate build surface on which the component is built, the plurality of fixture segments spaced apart from one another; and a deposition assembly having a deposition head through which melted feedstock material is deposited onto the plurality of fixture segments.

The additive manufacturing system according to any one of the previous clauses, wherein each fixture segment of the plurality of fixture segments comprises: an inner surface; an outer surface opposite the inner surface; an upper surface; a lower surface opposite the upper surface; and a plurality of cavities spaced apart from one another extending through the outer surface and the lower surface.

The build table assembly according to any one of the previous clauses, wherein the plurality of fixture segments comprises four fixture segments.

The build table assembly according to any one of the previous clauses, further comprising: a plurality of upper nuts, each upper nut of the plurality of upper nuts received within a corresponding cavity of the plurality of cavities; and a plurality of fasteners fixing each fixture segment of the plurality of fixture segments to the rim, each fastener of the plurality of fasteners threadedly engaging a corresponding upper nut to retain the plurality of fasteners within a corresponding cavity.

The additive manufacturing system according to any one of the previous clauses, wherein each cavity has an obround shape.

The additive manufacturing system according to any one of the previous clauses, wherein each fastener of the plurality of fasteners extends through a corresponding channel formed in the frame, a diameter of the channel being greater than a diameter of the fastener to permit outward radial movement of the plurality of fixture segments relative to the frame.

The additive manufacturing system according to any one of the previous clauses, wherein a plurality of recesses are formed in an outer surface of the frame and defines a plurality of fins, each fastener of the plurality of fasteners terminating within a corresponding recess of the plurality of recesses.

The additive manufacturing system according to any one of the previous clauses, wherein a ratio of stresses between the component and the plurality of fixture segments is less than 1.0 and defined by:

$$R_s = \oint_F S\_p \left/ \left( \oint_F \min (YS_{fixture}) + \sum_N (YS_{fastener} + YS_{upper\_nut}) \right) \right.$$

where S_p represents the stress accumulated in a tangential portion of the component, $YS_{fixture}$ represents a yield stress of the fixture segments, $YS_{fastener}$ represents a yield stress of the plurality of fasteners, and $YS_{upper\_nut}$ represents a yield stress of the upper nut.

The additive manufacturing system according to any one of the previous clauses, wherein the ratio of stresses between the component and the plurality of fixture segments is equal to or greater than 0.2 and equal to or less than 0.8.

The additive manufacturing system according to any one of the previous clauses, wherein the ratio of stresses between the component and the plurality of fixture segments is equal to or greater than 0.3 and equal to or less than 0.5.

A build table assembly for supporting a component, the build table assembly comprising: a frame; and a plurality of fixture segments provided on the frame, the plurality of fixture segments defining an arcuate build surface on which the component is built, the plurality of fixture segments spaced apart from one another, wherein a ratio of stresses between the component and the plurality of fixture segments is less than 1.0 and defined by:

$$R_s = \oint_F S\_p \left/ \left( \oint_F \min (YS_{fixture}) + \sum_N (YS_{fastener} + YS_{upper\_nut}) \right) \right.$$

where S_p represents the stress accumulated in a tangential portion of the component, $YS_{fixture}$ represents a yield stress of the fixture segments, $YS_{fastener}$ represents a yield stress of the plurality of fasteners, and $YS_{upper\_nut}$ represents a yield stress of an upper nut.

The build table assembly according to any one of the previous clauses, wherein the ratio of stresses between the component and the plurality of fixture segments is equal to or greater than 0.2 and equal to or less than 0.8.

The build table assembly according to any one of the previous clauses, wherein the ratio of stresses between the component and the plurality of fixture segments is equal to or greater than 0.3 and equal to or less than 0.5.

**Claims**

1. A build table assembly (104) for supporting a component (102), the build table assembly (104) comprising:

   a base (202) having an upper surface (302);
   a frame (110) extending from the upper surface (302) of the base (202), the frame (110) defining an upper wall (310);
   a rim (112) formed on the upper wall (310) of the frame (110); and
   a plurality of fixture segments (114) positioned on the rim (112) opposite the upper wall (310) of the frame (110), the plurality of fixture segments (114) defining an arcuate build surface (116) on which the component (102) is built, the plurality of fixture segments (114) spaced apart from one another.

2. The build table assembly (104) of claim 1, wherein each fixture segment (114) of the plurality of fixture segments (114) comprises:

   an inner surface (324);
   an outer surface (326) opposite the inner surface (324);
   an upper surface (328);

a lower surface (330) opposite the upper surface (328); and
a plurality of cavities (332) spaced apart from one another extending through the outer surface (326) and the lower surface (330).

3. The build table assembly (104) of claim 2, wherein the plurality of fixture segments (114) comprises four fixture segments (114).

4. The build table assembly (104) of any of claim 2 or claim 3, further comprising:

a plurality of upper nuts (340), each upper nut (340) of the plurality of upper nuts (340) received within a corresponding cavity (332) of the plurality of cavities (332); and
a plurality of fasteners (322) fixing each fixture segment (114) of the plurality of fixture segments (114) to the rim (112), each fastener (322) of the plurality of fasteners (322) threadedly engaging a corresponding upper nut (340) to retain the plurality of fasteners (322) within a corresponding cavity (332).

5. The build table assembly (104) of any of claim 3 or claim 4, wherein each cavity (332) has an obround shape.

6. The build table assembly (104) of any of claims 3-5, wherein each fastener (322) of the plurality of fasteners (322) extends through a corresponding channel (360) formed in the frame (110), a diameter of the channel (360) being greater than a diameter of the fastener (322) to permit outward radial movement of the plurality of fixture segments (114) relative to the frame (110).

7. The build table assembly (104) of claim 6, wherein a plurality of recesses (312) are formed in an outer surface (326) of the frame (110) and defines a plurality of fins (314), each fastener (322) of the plurality of fasteners (322) terminating within a corresponding recess (312) of the plurality of recesses (312).

8. The build table assembly (104) of any of claims 1-7, wherein a ratio of stresses between the component (102) and the plurality of fixture segments (114) is less than 1.0 and defined by:

$$
R_s = \oint_F S\_p \Bigg/ \left( \oint_F \min\left(YS_{\text{fixture}}\right) + \sum_N \left(YS_{\text{fastener}} + YS_{\text{upper\_nut}}\right) \right)
$$

where S_p represents the stress accumulated in a tangential portion of the component (102), $YS_{\text{fixture}}$ represents a yield stress of the fixture segments (114), $YS_{\text{fastener}}$ represents a yield stress of the plurality of fasteners (322), and $YS_{\text{upper\_nut}}$ represents a yield stress of the upper nut (340).

9. The build table assembly (104) of claim 8, wherein the ratio of stresses between the component (102) and the plurality of fixture segments (114) is equal to or greater than 0.2 and equal to or less than 0.8.

10. The build table assembly (104) of any of claim 8 or claim 9, wherein the ratio of stresses between the component (102) and the plurality of fixture segments (114) is equal to or greater than 0.3 and equal to or less than 0.5.

11. An additive manufacturing system (100) for producing a component (102), the additive manufacturing system (100) comprising:

a platform (108);
the build table assembly (104) according to any of claims 1-10 disposed on the platform (108) and rotatable relative to the platform (108) about a vertical axis of the build table assembly (104); and
a deposition assembly (120) having a deposition head through which melted feedstock material is deposited onto the plurality of fixture segments (114).

12. The additive manufacturing system (100) according to any of claims 1-11, wherein a ratio of stresses between the component (102) and the plurality of fixture segments (114) is less than 1.0 and defined by:

$$R_s = \oint_F S\_p \Big/ \left( \oint_F \min(YS_{fixture}) + \sum_N (YS_{fastener} + YS_{upper\_nut}) \right)$$

where $S\_p$ represents the stress accumulated in a tangential portion of the component (102), $YS_{fixture}$ represents a yield stress of the fixture segments (114), $YS_{fastener}$ represents a yield stress of the plurality of fasteners (322), and $YS_{upper\_nut}$ represents a yield stress of the upper nut.

13. The additive manufacturing system (100) of claim 12, wherein the ratio of stresses between the component (102) and the plurality of fixture segments (114) is equal to or greater than 0.2 and equal to or less than 0.8.

14. The additive manufacturing system (100) of any of claim 12 or claim 13, wherein the ratio of stresses between the component (102) and the plurality of fixture segments (114) is equal to or greater than 0.3 and equal to or less than 0.5.

FIG.1

FIG. 2

FIG. 3

FIG. 4

## EUROPEAN SEARCH REPORT

Application Number

EP 23 21 8983

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/070418 A1 (WANG GENGXIANG [CN] ET AL) 5 March 2020 (2020-03-05)<br>* abstract *<br>* figures 1-5 *<br>* paragraph [0005] – paragraph [0006] *<br>* paragraph [0030] *<br>* paragraph [0034] *<br>* paragraph [0040] *<br>----- | 1-3,5,11 | INV.<br>B29C64/245<br>B22F12/30<br>B33Y30/00<br><br>ADD.<br>B29C64/118<br>B22F10/22<br>B33Y10/00 |
| A | CN 113 858 613 A (HANGZHOU HIMALAYA INFORMATION TECH CO LTD)<br>31 December 2021 (2021-12-31)<br>* figures 1,4-5 *<br>----- | 1-14 | |

TECHNICAL FIELDS SEARCHED (IPC)

B29C
B22F

The present search report has been drawn up for all claims

| Place of search | Date of completion of the search | Examiner |
|---|---|---|
| The Hague | 10 May 2024 | Lozza, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 21 8983**

This annex lists the patent family members relating to the patent documents cited in the above-mentioned European search report.
The members are as contained in the European Patent Office EDP file on
The European Patent Office is in no way liable for these particulars which are merely given for the purpose of information.

**10-05-2024**

| Patent document cited in search report | Publication date | Patent family member(s) | Publication date |
|---|---|---|---|
| US 2020070418 A1 | 05-03-2020 | CN 110154390 A<br>US 2020070418 A1 | 23-08-2019<br>05-03-2020 |
| CN 113858613 A | 31-12-2021 | NONE | |

EPO FORM P0459